# EUROPEAN PATENT APPLICATION

(11) **EP 4 664 320 A1**
(43) Date of publication of application: **17.12.2025**
(21) Application number: 25181856.3
(22) Date of filing: 10.06.2025
(51) Int. Cl.: G06F 16/483, G06F 16/906, G06N 3/00

(54) **METHODS AND SYSTEMS FOR VALIDATING MULTIMODAL INFORMATION**

(30) Priority: 14.06.2024 FR 2406333
(71) Applicant: Accenture Global Solutions Limited, Dublin 4 (IE)
(72) Inventor: NARESSI, Alexandre, 06560 Valbonne (FR); CAPPELIER, Chloe, 06160 Antibes (FR)
(74) Representative: Müller-Boré & Partner Patentanwälte PartG mbB

(57) **Abstract**

Methods and systems for validating multimodal experience inputs are disclosed. The multimodal experience inputs are received from a user and embeddings are generated based upon the multimodal experience inputs. Each of the embeddings is processed using a claim identifier model to identify at least one truth claim. The at least one truth claim is evaluated further for at least one logical fallacy from a first set of logical fallacies and a second set of logical fallacies. Based upon the evaluated at least one logical fallacy for the at least one truth claim, an alert is generated. The alert provides insights describing claim logic and veracity to warn the user about a manipulation attempt.

## Description

### CROSS-REFERENCE TO RELATED PATENT APPLICATIONS

This application claims priority to France Provisional Application No 2406333, filed on June 14, 2024, the entire content of which is hereby incorporated by reference in the entirety for all purposes.

### TECHNICAL FIELD

Various examples described herein relate generally to methods and systems for validating multimodal information.

### BACKGROUND

Increased accessibility to the Internet has enabled social media platforms to evolve from text-based forums to multimodal environments. The multimodal environments may be used to generate and communicate information (e.g., related to products and/or services) via a combination of different modalities such as text, images, videos, audio, and/or the like. Additionally, the multimodal environments may enable leveraging of Artificial Intelligence (AI) models or Large Language Models (LLMs) for generating the information. While the information generated and communicated using the multimodal environments allows for simpler and faster sharing of detailed, expressive, and user-friendly content, the information may include misinformation or false information or deepfake information that may threaten trust and confidence of users by manipulating the users. Therefore, information validation systems are employed for validating authenticity of the information, which may aid in detecting and preventing communication of the misinformation or the false information.

In existing approaches, the information validation systems may use rule-based engines that validate the authenticity of the information based on pre-defined rules. However, the rule-based engines may fail to dynamically identify cross-connections or contextual clues associated with the information of the different modalities and to identify the deepfake information generated using the AI models or the LLM models, which may result in inaccurate validation of the information. In addition, in case of the inaccurate validation, the information validation system may involve manual effort to further validate the authenticity of the information. Therefore, in the existing approaches, the information validation systems may expend a significant amount of time, human resources, and computing resources (e.g., processing resources, memory resources, communication resources, and/or the like) for validating the authenticity of the information.

### SUMMARY

In at least one example, the present disclosure provides a computer-implemented method for validating multimodal experience inputs. The method includes receiving the multimodal experience inputs from the user and generating a plurality of embeddings based upon the received multimodal experience inputs. The method includes identifying at least one truth claim by processing each of the plurality of embeddings using a claim identifier model. The method includes evaluating the at least one truth claim for at least one logical fallacy from a first set of logical fallacies and a second set of logical fallacies. Based upon the evaluated at least one logical fallacy for the at least one truth claim, the method includes generating an alert providing insights describing claim logic and veracity to warn the user about a manipulation attempt.

The present disclosure further describes a system for implementing the method provided herein. The present disclosure also describes a, in particular non-transitory, computer-readable storage media (CRM) having instructions stored thereon which, when executed by one or more processors of a computing device, cause the computing device to perform operations in accordance with the method described herein.

It is appreciated that the method in accordance with the present disclosure can include any combination of the aspects and features described herein. That is, the method in accordance with the present disclosure is not limited to the combinations of aspects and features specifically described herein but also includes any combination of the aspects and features provided.

The details of one or more implementations of the present disclosure are set forth in the accompanying drawings and the description below. Other features and advantages of the present disclosure will be apparent from the description and drawings, and from the claims.

### BRIEF DESCRIPTION OF THE DRAWINGS

Various examples in accordance with the present disclosure will be described with reference to the drawings, in which:
FIG. 1 depicts an example environment used to execute implementations of the present disclosure.
FIG. 2 depicts an example conceptual architecture of a multimodal information manager of an information validation system disclosed in the example environment of FIG. 1, for validating multimodal experience inputs, in accordance with implementations of the present disclosure.
FIG. 3 depicts an example interface of an application being executed on a user device for reception of the multimodal experience inputs, in accordance with implementations of the present disclosure.
FIGS. 4A and 4B depict example illustrations of validating the multimodal experience inputs, in accordance with implementation of the present disclosure.
FIGS. 5A and 5B depict another example illustrations of validating the multimodal experience inputs, in accordance with implementation of the present disclosure.
FIG. 6 is a flow diagram that presents an example computer implemented method for validating the multimodal experience inputs, in accordance with implementations of the present disclosure.
FIG. 7 depicts an example computer system to implement the information validation system disclosed in the example environment of FIG. 1, in accordance with implementations of the present disclosure.

Like reference numbers and designations in the various drawings indicate like elements.

### DETAILED DESCRIPTION

In the following description, various examples will be illustrated by way of example and not by way of limitation in the figures of the accompanying drawings. References to various examples in this disclosure are not necessarily to the same example, and such references mean at least one. While specific implementations and other details are discussed, it is to be understood that this is done for illustrative purposes only. A person skilled in the relevant art will recognize that other components and configurations may be used without departing from the scope and spirit of the claimed subject matter.

Reference to any "example" herein (e.g., "for example," "an example of," by way of example," or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various examples given in this specification.

Without intent to limit the scope of the disclosure, examples of instruments, apparatus, methods, and their related results according to the examples of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions, will control.

The term "comprising" when utilized means "including, but not necessarily limited to"; it specifically indicates open-ended inclusion or membership in the so-described combination, group, series, and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A . . . and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality or acts involved.

Specific details are provided in the following description to provide a thorough understanding of examples. However, it will be understood by one of ordinary skill in the art that examples may be practiced without these specific details. For example, systems may be shown in block diagrams so as not to obscure the examples in unnecessary detail. In other instances, well-known processes, structures, and techniques may be shown without unnecessary detail in order to avoid obscuring example examples.

The specification and drawings are to be regarded in an illustrative rather than a restrictive sense. It will, however, be evident that various modifications and changes may be made thereunto without departing from the broader spirit and scope as set forth in the claims.

This disclosure should be interpreted according to the exemplary definitions provided below. In case of a contradiction between the definitions in the definitions section and other sections of this disclosure, this section should prevail. In case of a contradiction between the definitions in this section and a definition or a description in any other document, including in another document incorporated in this disclosure by reference, this section should prevail, even if the definition or the description in the other document is commonly accepted by a person of ordinary skill in the art.

"Multimodal experience inputs," "Multimodal information," "Information with different modalities," and/or the like, may refer to data or content related to any of various domains or industries such as retail industries, medical or health domain, telecommunication, Information Technology (IT), manufacturing and utilities, automotive, and/or the like. Further, the data or the content may be associated with different modalities such as text, videos, audio, images, and/or the like.

"User" and/or the like, may refer to a customer or an entity.

"Embeddings" and/or the like, may refer to text embeddings and/or vector embeddings. The text embeddings encompass conversion of the information associated with the text into numerical vectors. The vector embeddings encompass conversion of the information associated with a wider range of modalities such as the images, the videos, and/or the like, into numerical vectors.

"Truth claims" and/or the like, may refer to statements or features claimed by the multimodal experience inputs.

"First set of logical fallacies" and/or the like, may refer to faulty reasoning or reasoning errors including invalid arguments, illogical arguments, deceptiveness, and/or the like.

"Second set of logical fallacies" and/or the like, may refer to disproof indicating a set of facts proving respective truth claims are untrue.

"Deceptive designs," or "dark patterns," and/or the like, may refer to designs that prompts a user to perform one or more actions by deceiving, misdirecting, or obstructing capability of the user.

"Trust Score," or "Overall score," and/or the like, may refer to an average score that may aid in deciding whether to trust the multimodal experience inputs related to a product and/or a service.

"Claim scores" and/or the like, may refer to scores generated for the truth claims.

"Design scores" and/or the like, may refer to scores generated for the deceptive designs. The claim scores and the design scores may indicate a level of impact that can be caused on the user by the truth claims.

Implementations of the present disclosure enable validation of multimodal experience inputs (e.g., multimodal information) and generation of an alert and a trust score for the multimodal experience inputs by leveraging various fine-tuned models. Leveraging of the various fine-tuned models may improve accuracy and efficiency of the validation, while reducing time, manual effort, and computational resources required for validating the multimodal experience inputs.

The multimodal experience inputs may be validated by identifying one or more truth claims and one or more deceptive designs present in the multimodal experience inputs and evaluating the one or more truth claims for one or more logical fallacies. The alert and the trust score may be generated based on the validation results. The alert may provide insights describing claim logic and veracity to warn users including customers about manipulation attempts that may be caused by the multimodal experience inputs. Additionally, or alternatively, the alert may warn the users including entities (e.g., brands) to review and improve their own communication of the multimodal experience inputs and User Experience (UX) or product design to foster trust of the users and may propose adjustments to design, logic, and wordings in the multimodal experience inputs that may further prevent the manipulation attempts. Therefore, presence and communication of misinformation or false information or deepfake information may be easily detected and prevented.

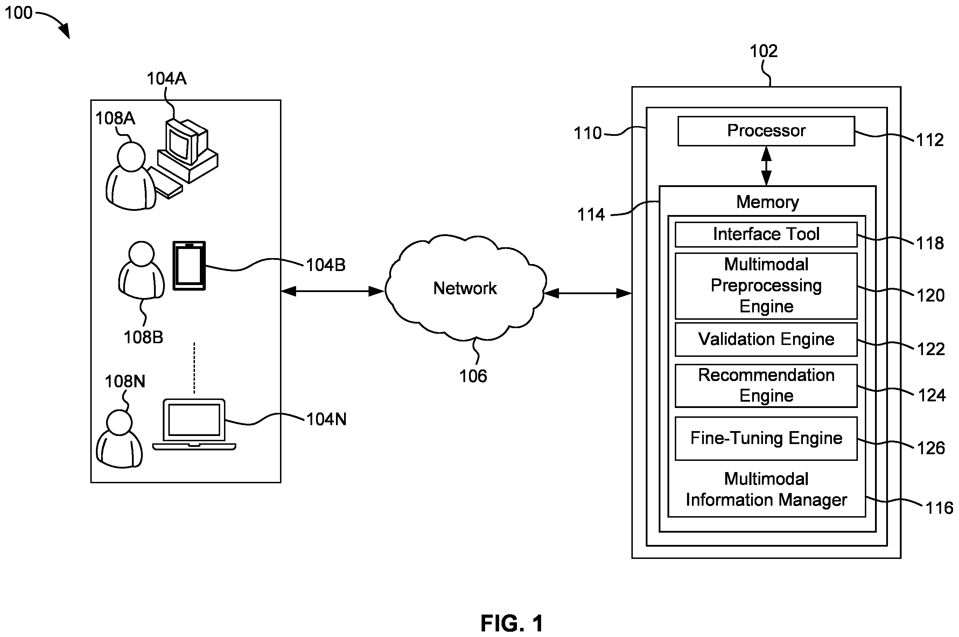

FIG. 1 depicts an example environment 100 used to execute implementations of the present disclosure. The example environment 100, depicted in FIG. 1, includes an information validation system 102 and user devices 104A-104N. The information validation system 102 may communicate with the user devices 104A-104N using a network 106. In some examples, the network 106 may include a Local Area Network (LAN), a Wide Area Network (WAN), the Internet, or a combination thereof. In some examples, the network may be accessed over a wired and/or a wireless communication link.

The user devices 104A-104N may be associated with users 108A-108N, respectively. Non-limiting examples of a user device may include a server, a notebook, a desktop, a netbook, smartphones, laptops, a tablet, and/or voice-enabled devices. It is contemplated that implementations of the present disclosure may be realized with any appropriate type of user devices.

The user devices 104A-104N may be used by the users 108A-108N to provide multimodal experience inputs to the information validation system 102 for validation. The multimodal experience inputs may be derived from one or more sources such as, but are not limited to, advertisements, social media posts, news, User Interface (UI) or Graphical User Interface (GUI) designs, images, videos, applications, product packaging designs, User Experience (UX) contents, websites, and/or the like. The multimodal experience inputs may include information associated with different modalities such as text, videos, images, audio, and/or the like. The information associated with the different modalities may be related to products and/or services of various domains or industries such as retail industries, medical or health care domains, fashion industries, telecommunication, Information Technology (IT), manufacturing and utilities, automotive, and/or the like. By way of non-limiting example, the multimodal experience inputs derived from an advertisement related to a product may include information associated with a visual modality (e.g., images, videos, and/or the like) and text. The text may provide a written description of the product. The visual modality may provide a visual representation of the product (e.g., images of ingredients or components of the product, icons indicating how to use the product, and/or the like).

In some implementations, the users 108A-108N may include customers (consumers, clients, readers, and/or the like). In such implementations, the multimodal experience inputs may be validated before consumption, or for purchasing or availing the products and/or the services. In some other implementations, the users 108A-108N may include entities such as enterprises, organizations, brand designers, marketers, and/or the like. In such implementations, the multimodal experience inputs or the sources related to the multimodal experience inputs (e.g., advertisements, social media posts, websites, and/or the like) may be created or generated by the entities to promote the products and/or services and the multimodal experience inputs may be validated before communicating with the customers.

The information validation system 102 may validate the multimodal experience inputs and generate an alert and a trust score. In some examples, the alert intended for the users 108A-108N including the customers may warn the customers about possible manipulation attempts associated with the multimodal experience inputs before consumption. In some other examples, the alert intended for the users 108A-108N including the entities may warn the entities about the possible manipulation attempts associated with multimodal experience inputs before propagating or communicating the multimodal experience inputs to the customers. Based on the alert, the entities may perform one or more actions (e.g., modify the multimodal experience inputs, generate new multimodal experience inputs, and/or the like) in order to continue engagement with the customers effectively. Therefore, the information validation system 102 may act as a mainstream spam filter at the end of the customers as well as the entities for detecting misinformation or false information or deepfake information present in the multimodal experience inputs.

In some examples, the information validation system 102 may be implemented as an onpremises system that is operated by an enterprise or a third-party engaged in cross-platform interactions and information management. In some examples, the information validation system 102 may be implemented as an off-premises system (for example, cloud or on-demand) that is operated by the enterprise or a third-party on behalf of the enterprise. In some examples, the information validation system 102 may be implemented in a cloud environment. For simplicity, the information validation system 102 depicted in FIG. 1 may be a cloud-based system that is intended to represent various forms of servers including a web server, an application server, a proxy server, a network server, a server pool, and/or the like.

In some examples, the information validation system 102 may be implemented by way of a single device or a combination of multiple devices that may be operatively connected or networked together. The information validation system 102 may be implemented in hardware or a suitable combination of hardware and software. The "hardware" may include a combination of discrete components, an integrated circuit, an application-specific integrated circuit, a fieldprogrammable gate array, a digital signal processor, or other suitable hardware. The "software" may include one or more objects, agents, threads, lines of code, subroutines, separate software applications, or other suitable software structures operating in one or more software applications.

Still referring to FIG. 1, the information validation system 102 includes a computing device 110. The computing device 110 includes a processor 112 and a memory 114 communicably coupled to the processor 112. The processor 112 may include one or more processors. Examples of the processor 112 may include, but are not limited to, microprocessors, microcomputers, microcontrollers, digital signal processors, central processing units, state machines, logic circuits, and/or any devices that manipulate data or signals based on operational instructions. Among other capabilities, the processor 112 may fetch instructions (also be referenced to as processorexecutable instructions or machine-executable instructions) from the memory 114 and execute the fetched instructions for performing operations according to the present disclosure. The memory 114 may be non-volatile or non-transitory computer-readable medium (CRM) such as, a magnetic disk or solid-state non-volatile memory or volatile medium such as Random Access Memory (RAM), and/or the like.

Further, the computing device 110 includes a multimodal information manager 116. The multimodal information manager 116 may be stored in the memory 114 and provided as a downloadable library including the instructions. The multimodal information manager 116 may include various modules 118-126 such as an interface tool 118, a multimodal preprocessing engine 120, a validation engine 122, a recommendation engine 124, and a fine-tuning engine 126.

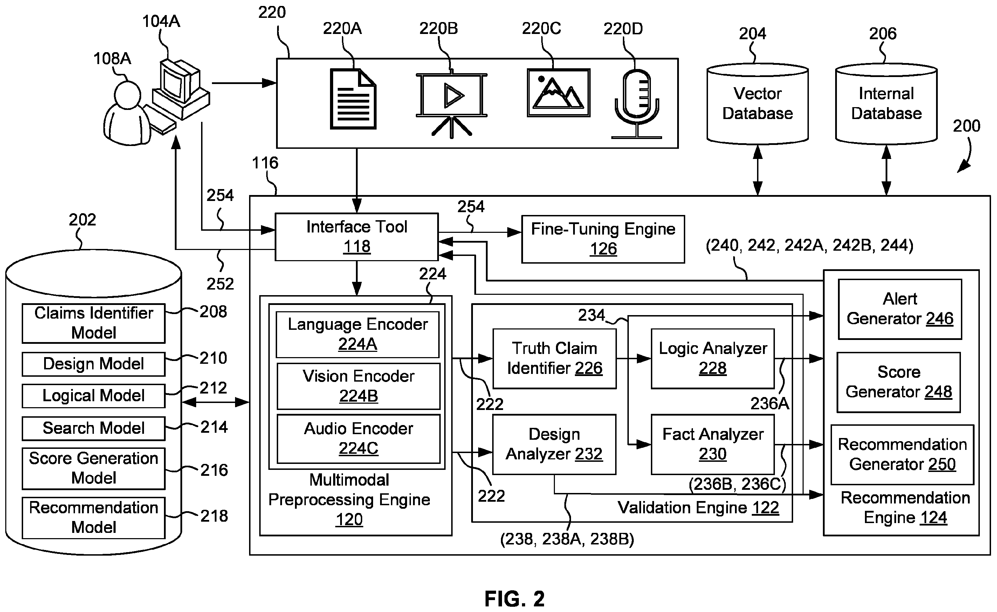

In an implementation, the processor 112 may execute the interface tool 118 to receive the multimodal experience inputs from the user devices 104A-104N associated with the users 108A-108N and provide the alert and the trust score corresponding to the received multimodal experience inputs to the user devices 104A-104N associated with the users 108A-108N. In an implementation, the processor 112 may execute the multimodal preprocessing engine 120, the validation engine 122, and the recommendation engine 124 to validate the multimodal experience inputs and generate the alert and the trust score for the multimodal experience inputs using various models (depicted in FIG. 2). In an implementation, the processor 112 may execute the fine-tuning engine 126 to dynamically fine-tune the various models, which are used for validating the multimodal experience inputs.

Various examples depicting validation of the multimodal experience inputs are described in detail in conjunction with FIGS. 2-7.

FIG. 2 depicts an example conceptual architecture 200 of the multimodal information manager 116 of the information validation system 102 disclosed in the example environment 100 of FIG. 1, for validating the multimodal experience inputs, in accordance with implementations of the present disclosure. The multimodal information manager 116 may be coupled to a model database 202, a vector database 204, and an internal database 206.

In some examples, the information validation system 102 may include the model database 202 and the vector database 204. In some other examples, the model database 202 and the vector database 204 may be externally coupled to the information validation system 102.

The model database 202 may include models 208-218 (also be referenced as agents) such as a claim identifier model 208, a design model 210, a logical model 212, a search model 214, a score generation model 216, and a recommendation model 218. Implementations of the present disclosure may employ a distributed agentic or modelling framework, which may configure each of the models 208-218 to perform a dedicated function. In some examples, the claim identifier model 208, the design model 210, the logical model 212, the search model 214, the score generation model 216, and the recommendation model 218 may include foundation models, Large Language Models (LLMs), Vision Language Models (VLMs), Artificial Intelligence (AI) models, Machine Learning (ML) models, transformer models, and/or the like. In some other examples, the claim identifier model 208, the design model 210, the logical model 212, the search model 214, the score generation model 216, and the recommendation model 218 may include different agents accessing foundation models, LLMs, VLMs, AI models, ML models, transformer models, and/or the like, for performing dedicated functions according to the present disclosure (described in detail below).

The vector database 204 may include contextual embeddings. The models 208-218 of the model database 202 and the contextual embeddings stored in the vector database 204 may be used to validate the multimodal experience inputs and generate the alert and the trust score based on the validation, which are described in detail below.

The internal database 206 may store various data and intermediate results generated by the interface tool 118, the multimodal preprocessing engine 120, the validation engine 122, the recommendation engine 124, and the fine-tuning engine 126.

The interface tool 118 may enable reception of multimodal experience inputs 220 from a user device (e.g., a user device 104A) of the user devices 104A-104N. The user device 104A may be associated with a user 108A. In some examples, the user 108A may be a customer who received the multimodal experience inputs 220 through one or more sources such as an advertisement, an UI or GUI content, a product packaging design, a design or layout, or any other similar representation used to provide information. In some other examples, the user 108A may include an entity (e.g., an enterprise, an organization, a brand designer, a marketer, and/or the like) who generated the multimodal experience inputs 220 to communicate or share with the customer. Each of the multimodal experience inputs 220 may include information associated with one of different modalities such as text 220A, a video 220B, an image 220C, audio 220D, and/or a combination thereof, and may be related to a product and/or a service.

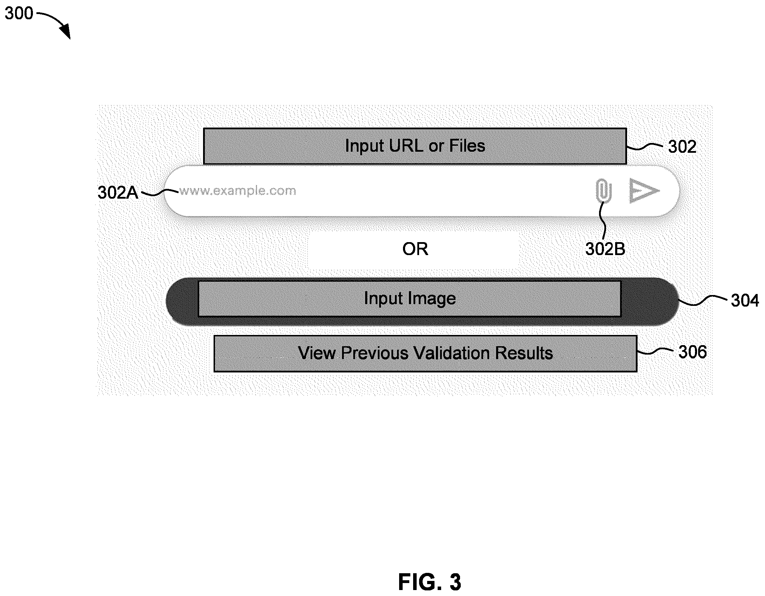

In some examples, the interface tool 118 may represent one or more interfaces of an application (e.g., a chatbot application, e-commerce application, and/or the like) that may be executed on the user device 104A to enable receipt of the multimodal experience inputs 220 from the user 108A, respectively. An example interface 300 of the application being executed on the user device 104A for reception of the multimodal experience inputs 220 is depicted in FIG. 3. As depicted in FIG. 3, by way of non-limiting example, the example interface 300 presents a first option 302 and a second option 304 on a user interface of the user device 104A, that may allow the user 108A to input or provide the multimodal experience inputs 220 including the information in the different modalities. The first option 302 may allow the user 108A to input a website link 302A (e.g., Uniform Resource Locator (URL) link) that may direct to a web page or a website including the multimodal experience inputs 220 (e.g., the information in one or more of the different modalities such as the text 220A, the video 220B, the image 220C, the audio 220D, and/or the like). Additionally, or alternatively, the first option 302 may allow the user to upload files 302B that include the multimodal experience inputs 220. The second option 304 may allow the user 108A to upload a multimodal experience input in the form of the image 220C. Therefore, using the first option 302 and the second option 304, the user 108A associated with the user device 104A may provide the multimodal experience inputs 220 including the information in the different modalities. In addition, as depicted in FIG. 3, the example interface 300 presents a third option 306 on the user interface of the user device 104A, which may allow the user 108A associated with the user device 104A to view and analyze results of validations of previous multimodal experience inputs.

Referring back to FIG. 2, in some other examples, the interface tool 118 may allow the information validation system 102 to connect with the user device 104A for reception of the multimodal experience inputs 220 via an Application Programming Interface (API). The interface tool 118 may provide the multimodal experience inputs 220 to the multimodal preprocessing engine 120 and/or store the multimodal experience inputs 220 in the internal database 206.

The multimodal preprocessing engine 120 may generate embeddings 222 for the multimodal experience inputs 220. In some examples, the multimodal preprocessing engine 120 may use an encoder 224 for generating the embeddings 222 for the multimodal experience inputs 220. For simplicity, the encoder 224 including a language encoder 224A, a vision encoder 224B, and an audio encoder 224C is depicted in FIG. 2, however it is contemplated that implementations of the present disclosure may be realized with any other suitable encoder.

The language encoder 224A may be operated if any of the multimodal experience inputs 220 include the information associated with the modality like the text 220A. The language encoder 224A may capture semantic meaning and contextual associations between words and phrases present in the text 220A using any suitable similarity metrics. Non-limiting examples of the similarity metrics may include a cosine similarity metric, a Jaccard similarity metric, and/or the like. The language encoder 224A may convert the captured semantic meaning and contextual associations into the embeddings 222. The embeddings 222 corresponding to the text 220A may include text embeddings, which indicate numerical vectors for the text 220A.

The vision encoder 224B may be operated if any of the multimodal experience inputs 220 include the information associated with the modality like the video 220B or the image 220C. The vision encoder 224B may capture visual properties from the video 220B and/or the image 220C and convert the visual properties into the embeddings 222. The visual properties may include color, form, spatial position, movement, resolution, or any other features or characteristics that affect quality of the video 220B and/or the image 220C. The embeddings 222 corresponding to the video 220B and/or the image 220C may include vector embeddings, which indicate numerical vectors for the video 220B and/or the image 220C.

The audio encoder 224C may be operated if any of the multimodal experience inputs 220 includes the information associated with the modality like the audio 220D. The audio encoder 224C may derive a text output from the audio 220D by applying speech-to-text conversion techniques on the audio 220D and convert the text output into the embeddings 222. The embeddings 222 may include the text embeddings indicating numerical vectors for the text output derived from the audio 220D. As would be understood, the embeddings 222 may include the embeddings generated by the language encoder 224A, the vision encoder 224B, and the audio encoder 224C, if the multimodal experience inputs 220 include the information associated with all the modalities such as the text 220A, the video 220B, the image 220C, and the audio 220D.

In some other examples, the multimodal preprocessing engine 120 may generate the embeddings 222 for the multimodal experience inputs 220 using embeddings models (not shown). The multimodal preprocessing engine 120 may extract raw text from the multimodal experience inputs 220 using suitable data mining techniques. Once the raw text is extracted, the multimodal preprocessing engine 120 may process the raw text using the embedding models to generate the embeddings 222. Non-limiting examples of the embedding models may include Bidirectional and Encoder Representations from Transformer (BERT) models, Generative Pre-trained Transformer (GPT) models, and/or the like.

The embeddings 222 corresponding to the multimodal experience inputs 220 may be provided to the validation engine 122 and/or may be stored in the vector database 204 or the internal database 206.

The validation engine 122 may perform validation of the multimodal experience inputs 220. Performing validation of the multimodal experience inputs 220 may involve validating authenticity of the multimodal experience inputs 220 by identifying truth claims and deceptive designs present in the multimodal experience inputs 220 and by evaluating the identified truth claims for logical fallacies. Therefore, from the validation of the multimodal experience inputs 220, misinformation or false information in the multimodal experience inputs 220 may be detected.

As depicted in FIG. 2, the validation engine 122 includes a truth claim identifier 226, a logic analyzer 228, a fact analyzer 230, and a design analyzer 232.

The truth claim identifier 226 may receive the embeddings 222 corresponding to the multimodal experience inputs 220 and identify truth claims 234 associated with the multimodal experience inputs 220. The truth claims 234 may include features or details or statements claimed by the multimodal experience inputs 220. In an example, if the multimodal experience inputs 220 are related to a food product, the truth claims 234 may describe ingredients of the food product, nutritional information, allergic advice associated with the food product, advantages (e.g., health benefits) associated with the food product, and/or the like. By way of non-limiting example, the truth claims 234 identified for the multimodal experience inputs 220 related to the food product may include: (i) product is sugar free; (ii) product is gluten free; (iii) product is made of 100% naturally whole grain oats; and (vi) can lower cholesterol. In another example, if the multimodal experience inputs 220 are related to a Television (TV), the truth claims 234 may describe specifications of the TV, brand and/or manufacturing details of the TV, and/or the like. By way of non-limiting example, the truth claims 234 identified for the multimodal experience inputs 220 related to the TV may include: (i) Smart LED TV; (ii) TV is of 55 inches; and (iii) TV supports dual-band Wi-Fi. In yet another example, if the multimodal experience inputs 220 are related to a sporting event, the truth claims 234 may include: (i) sporting event is taking place at a stadium "ABC," (ii) sporting event is between a team 'M' and a team 'N,' (iii) booking opens till date "XYZ," and (vi) booking link "www.sporting_event.com".

In an implementation, the truth claim identifier 226 may use the claim identifier model 208 to identify the truth claims 234 in the multimodal experience inputs 220. The claim identifier model 208 may include a fine-tuned LLM. The claim identifier model 208 may be dynamically fine-tuned by the fine-tuning engine 126 and stored in the model database 202. Initially, the fine-tuning engine 126 may fine-tune the claim identifier model 208 using a library of claims. The library of claims may be extracted from various external library sources (not shown in FIG. 2). In some examples, the library of claims may be related to the various domains or sectors (e.g., retail industries, medical, telecommunication, IT, manufacturing and utilities, automotive, and/or the like) and of different languages. The library of claims may provide features or statements or details claimed by products and/or services related to the various domains or sectors, various news, various social media posts, and/or the like.

For identifying the truth claims 234 in the multimodal experience inputs 220, the truth claim identifier 226 may extract data inputs from the vector database 204 based on the embeddings 222 generated for the multimodal experience inputs 220. The data inputs may include contextual embeddings, which may match with the embeddings 222 and act as an additional context or relevant data for the multimodal experience inputs 220. Once the data inputs are extracted from the vector database 204, the truth claim identifier 226 may generate a prompt for the claim identifier model 208. The prompt may include the embeddings 222 and the data inputs. The truth claim identifier 226 may provide the prompt to the claim identifier model 208, which may process the prompt to determine sentences in the multimodal experience inputs 220 that constitute the truth claims 234 and process the determined sentences to identify the truth claims 234 in the multimodal experience inputs 220.

Additionally, or alternatively, the truth claim identifier 226 may summarize the truth claims 234 identified in the multimodal experience inputs 220 and store the summarization in the internal database 206. The truth claims 234 identified for the multimodal experience inputs 220 (or summarized truth claims) may be provided to the logic analyzer 228 and the fact analyzer 230, which may evaluate the truth claims 234 for a first set of fallacies 236A and a second set of fallacies 236B, respectively.

The logic analyzer 228 may evaluate the truth claims 234 and identify the first set of logical fallacies 236A for the truth claims 234. The first set of logical fallacies 236A may indicate faulty reasoning or reasoning errors associated with the truth claims 234. The faulty reasoning may include invalid arguments, illogical arguments, deceptiveness, and/or the like. In an example, a truth claim identified for the multimodal experience inputs 220 related to a food product states that "product is sugar free", however, the nutritional information of the food product indicates 2 grams of sugar. In such an example, a logical fallacy of the first set of logical fallacies 236A identified for the truth claim may state that "the term "sugar free" is misleading because of presence of 2 grams of sugar." In another example, a truth claim identified for the multimodal experience inputs 220 related to a food product states that "product is made with 100% whole grain oats", which is true or valid. In such a scenario, a logical fallacy of the first set of logical fallacies 236A identified for the truth claim may state that "none identified." In another example, a truth claim identified for the multimodal experience inputs 220 related to a utensil, states that "utensil is non-stick free", however specification of the utensil states that some parts of the utensil have non-stick coating. In such an example, a logical fallacy of the first set of logical fallacies 236A may state that "the term "non-stick free" is misleading.

In an implementation, the logic analyzer 228 may use the logical model 212 to identify the first set of logical fallacies 236A associated with the truth claims 234. The logical model 212 may be dynamically fine-tuned by the fine-tuning engine 126 and stored in the model database 202. Initially, the logical model 212 may be fine-tuned by the fine-tuning engine 126 using fine-tuned datasets. The fine-tuned datasets may include labelled examples of the first set of logical fallacies and text of truth claims without including any first set of logical fallacies. The labelled examples of the first set of logical fallacies and the text of truth claims without including any first set of logical fallacies may be identified by collecting results of previous validations of the multimodal experience inputs over time.

For evaluating the truth claims 234 for the first set of logical fallacies 236A, the logic analyzer 228 may generate a prompt for the logical model 212. The prompt may be a hard coded prompt, which provides instructions for the logical model 212 to identify the first set of logical fallacies 236A associated with the truth claims 234. The logic analyzer 228 may provide the prompt to the logical model 212, which may evaluate a structure of each of the truth claims 234 according to the instructions specified in the prompt and identify the first set of logical fallacies 236A associated with the truth claims 234 based on the evaluated structure. The first set of logical fallacies 236A associated with the truth claims 234 may be provided to the recommendation engine 124 or stored in the internal database 206.

The fact analyzer 230 may evaluate the truth claims 234 and identify the second set of logical fallacies 236B associated with the truth claims 234. The second set of logical fallacies 236B may indicate disproof for the truth claims 234. The disproof may indicate a set of facts proving a respective truth claim is untrue. In an example, a truth claim identified for the multimodal experience inputs 220 related to a food product states that "product is sugar free", however, the nutritional information of the food product indicates 2 grams of sugar. In such an example, a logical fallacy of the second set of logical fallacies may provide a disproof indicating that "a term "sugar free" means less than 0.5 gram of sugar per serving so presence of 2 grams of sugar contradicts the respective truth claim." In another example, a truth claim identified for the multimodal experience inputs 220 related to a food product states that "product is made with 100% whole grain oats", which is true or valid. In such a scenario, a logical fallacy of the second set of logical fallacies 236A identified for the truth claim may state that "none identified." In yet another example, a truth claim identified for a sporting event indicates that "booking open till date "XYZ," however a booking website shows a different date. In such an example, a logical fallacy of the second set of logical fallacies may provide a disproof indicating that "provided booking date "XYZ" is not true."

For evaluating the truth claims 234 for the second of logical fallacies 236B, the fact analyzer 230 may obtain fallacy inputs for the truth claims 234. The fallacy inputs may include, but are not limited to, confirmations, facts, evidence, disproof, falsehood, and/or the like, associated with the truth claims 234. In some examples, the fact analyzer 230 may use the search model 214 (e.g., a search agent or an AI agent) for obtaining the fallacy inputs for the truth claims 234. The fact analyzer 230 may provide the truth claims 234 to the search model 214, which may perform a search (e.g., web search) on external databases (not shown in FIG. 2) using an API to obtain fallacy inputs for the truth claims 234. The external databases may store the fallacy inputs associated with the information (e.g., information about the products and/or services, news, social media posts, and/or the like) or claims related to the various domains. The search model 214 may provide the fallacy inputs associated with the truth claims 234 to the fact analyzer 230. In some other examples, the fact analyzer 230 may communicate with information providers (e.g., third party information providers) directly to obtain the fallacy inputs for the truth claims 234. The information providers may maintain databases to store the fallacy inputs associated with the information (e.g., information about the products and/or services, news, social media posts, and/or the like) or claims related to the various domains. Based on the obtained fallacy inputs for the truth claims 234, the fact analyzer 230 may identify the second set of logical fallacies 236B associated with the truth claims 234. Therefore, the truth claims 234 are validated across domain or industry specialized knowledge.

Additionally, or alternatively, the fact analyzer 230 may identify confirmations 236C for the truth claims 234. The confirmations 236C may include proofs or evidence or verifications, which may indicate that the truth claims 234 are true or valid. The fact analyzer 230 may identify the confirmations 236C for the truth claims 234 based on the obtained fallacy inputs (as described above) for the truth claims 234.

The truth claims 234 and the associated first set of fallacies 236A and/or second set of fallacies 236B and/or confirmations 236C may be provided to the recommendation engine 124 and/or stored in the internal database 206.

In parallel to operation of the truth claim identifier 226, the logic analyzer 228, and the fact analyzer 230, the design analyzer 232 may be operated to identify deceptive designs 238 present in the multimodal experience inputs 220. As would be understood, the design analyzer 232 may be operated when the multimodal experience inputs 220 include the information associated with the video 220B and/or the image 220C including pictures, photos, animations, icons, and/or the like.

The deceptive designs 238 may include designs that prompt the user 108A to perform one or more actions (e.g., purchasing a product, availing a service, and/or the like) by deceiving, misdirecting, or obstructing the capability of the user to make another selection. In an example, consider that the multimodal experience inputs 220 include information associated with a food product in the form of the image 220C. Further, the image 220C may provide visual representations of cereals used in the food product, health benefits, and quantities of the cereals. The visual representations of the cereals and the health benefits may be enlarged and bolded. In such an example, the design analyzer 232 may identify the visual representations of the cereals and the health benefits as the deceptive designs 238, as the enlarged size of the cereals may mislead the user 108A about actual sizes and appearances of the cereals and bolded health benefits may result in overemphasis on the health benefits. In another example, consider that the multimodal experience inputs 220 related to a TV include the image 220C with a photo of a celebrity appearing to endorse the TV without actually using or believing in it. In such an example, the design analyzer 232 may identify the photo of the celebrity as one of the deceptive designs 238, as the photo of the celebrity may result in false endorsements.

In an implementation, the design analyzer 232 may use the design model 210 for identifying the deceptive designs 238 in the multimodal experience inputs 220. The design model 210 may include a fine-tuned Vision Language Model (VLM). The design model 210 may be dynamically fine-tuned by the fine-tuning engine 126 and stored in the model database 202. Initially, the fine-tuning engine 126 may fine-tune the design model 210 based on deceptive designs and honest designs collected over a time from previous validations of the multimodal experience inputs or from the external databases. The deceptive designs used for fine-tuning the design model 210 may include a description, visual examples associated with some deceptive patterns, a description of an alternative honest design for a respective deceptive design, and/or the like. The honest designs may include designs, which do not lead to any manipulation attempts.

For identifying the deceptive designs, the design analyzer 232 may generate a design prompt for the design model 210. The design prompt may be a hard coded prompt, which includes instructions for the design model 210 to identify the deceptive designs 238 and the honest designs associated with the multimodal experience inputs 220 and the embeddings 222 corresponding to the multimodal experience inputs 220. The design analyzer 232 may provide the design prompt to the design model 210. Based on the design prompt, the design model 210 may identify the honest designs and the deceptive designs 238 present in the multimodal experience inputs 220 and filter out the honest designs. Further, the design model 210 may analyze the deceptive designs 238 to describe a pattern type and a description associated with each of the deceptive designs 238. The design model 210 may provide the deceptive designs 238 and associated pattern types 238A and descriptions 238B to the design analyzer 232. The design analyzer 232 may provide the deceptive designs 238 and the associated pattern types 238A and descriptions 238B to the recommendation engine 124 and/or may store the deceptive designs 238 and the associated pattern types 238A and descriptions 238B in the internal database 206.

The recommendation engine 124 may generate an alert 240, a trust score 242, and/or recommendations 244 corresponding to the multimodal experience inputs 220. The recommendations 244 may be intended for the user 108A, if the user 108A includes the entity. For example, as depicted in FIG. 2, the recommendation engine 124 includes an alert generator 246, a score generator 248, and a recommendation generator 250.

The alert generator 246 may generate the alert 240. The alert generator 246 may generate the alert 240 based on the truth claims 234, the first set of logical fallacies 236A and the second set of logical fallacies 236B associated with the truth claims 234, the deceptive designs 238 and the associated pattern types 238A and descriptions 238B, and/or the like. In some examples, the alert 240 may include an alert for the truth claims 234 and/or an alert for the deceptive designs 238. By way of non-limiting example, the alert generated for the truth claims 234 related to a sporting event may state that "the truth claims made on the sporting event are well supported by evidences or confirmations, however it is recommended to visit a website of an organization who is organizing the sporting event to verify booking open dates and booking link." The alert generated for the deceptive designs 238 related to the sporting event may state that "the image seems to provide attractive visual representations of a stadium and players, but those are misleading visual representations as actual shape and appearance of the stadium may vary and some of the players may be not participating in an actual playing team." Therefore, the alert 240 includes insights or an overall summary describing claim logic and veracity associated with the multimodal experience inputs 220, thereby describing authenticity of the multimodal experience inputs 220.

In some examples, if the user 108A includes the customer, the alert 240 may warn the customer about the manipulation attempts and may also aid in determining whether the multimodal experience inputs 220 include any misinformation or false information. In some other examples, if the user 108A includes the entity, the alert 240 may warn the entity about manipulation attempts, negative perceptions, negative impact, and/or the like, which may cause on the customer. Therefore, the alert 240 may aid the entity in determining whether the multimodal experience inputs 220 may threaten trust and confidence of the customer. The alert 240 corresponding to the multimodal experience inputs 220 may be stored in the internal database 206.

The score generator 248 may generate the trust score 242 for the multimodal experience inputs 220. The trust score 242 may indicate an overall score that may aid in determining whether to trust the multimodal experience inputs 220 related to the product and/or the service.

For generating the trust score 242, the score generator 248 may generate claim scores 242A (also be referenced as claim quality scores) for the truth claims 234 and design scores 242B (also be referenced as severity scores) for the deceptive designs 238. The claim scores 242A and the design scores 242B may indicate a level of impact that may be caused on the user 108A from the truth claims 234 and the deceptive designs 238.

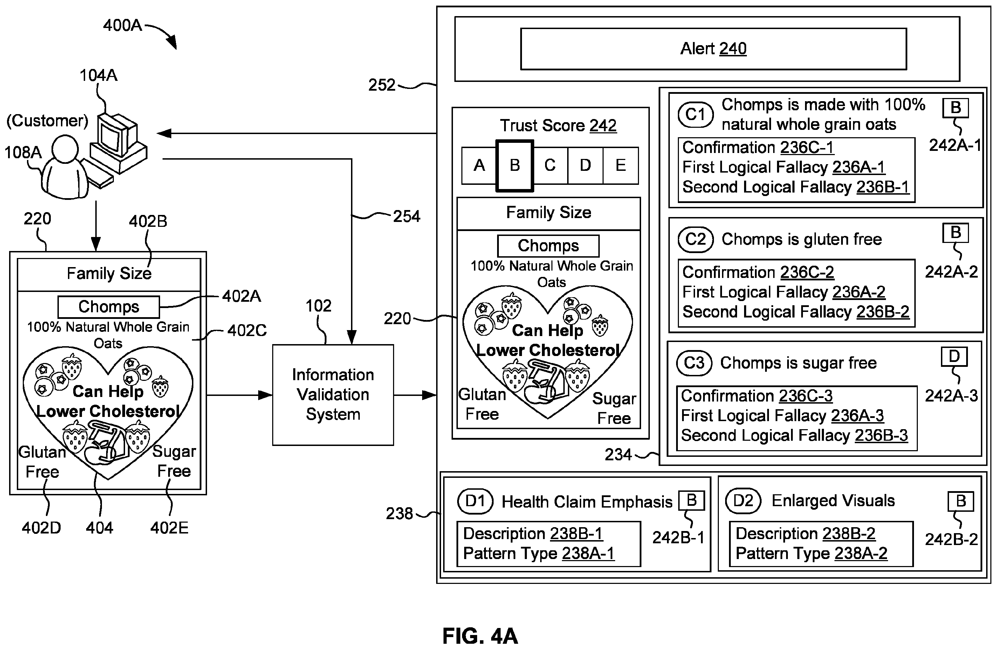

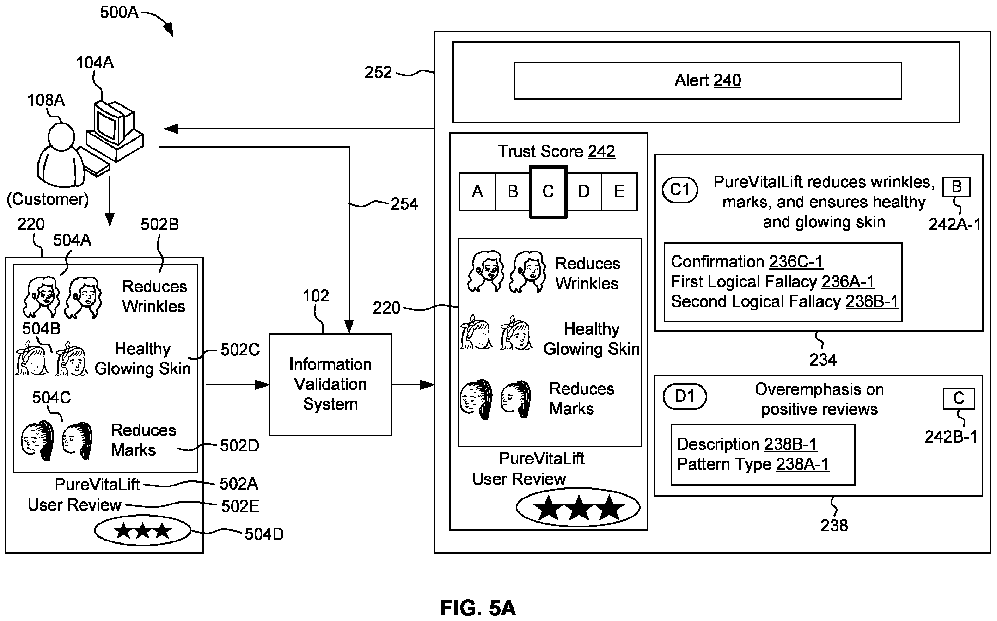

In an implementation, the score generator 248 may generate the claim scores 242A and the design scores 242B using the score generation model 216. To illustrate, the score generator 248 may generate prompts for the score generation model 216 to generate the claim scores 242A and the design scores 242B. A prompt generated for the claim scores 242A may instruct the score generation model 216 to provide the claim scores 242A for the truth claims 234 using a pre-defined claim rating tier. The pre-defined claim rating tier may describe claim rating patterns to generate the claim scores. To generate the claim scores 242A, the score generation model 216 may select one of the claim rating patterns from the pre-defined claim rating tier based on the domain to which the multimodal experience inputs 220 belong and use the selected claim rating pattern to generate the claim scores 242A for the truth claims 234. By way of non-limiting example, one of the claim rating patterns selected for generating the claim scores 242A may indicate: (i) Score 'A' - Quality of truth claim is definitely True; (ii) Score 'B' - Quality of truth claim is High; (iii) Score 'C' - Quality of truth claim is Medium; (vi) Score 'D' - Quality of truth claim is Low; and (v) Score 'E' - Quality of truth claim is definitely False. As would be understood, the score generation model 216 may identify whether the quality of the truth claims 234 are definitely true, or definitely false, or high, or medium, or low, based on the first set of logical fallacies 236A, the second set of logical fallacies 236B) and the confirmations 236C associated with the true claims 234 (described along with FIGS. 4A-4B and 5A-5B).

Similarly, a prompt generated for the design scores 242B may instruct the score generation model 216 to generate the design scores 242B for the deceptive designs 238 using a pre-defined design rating tier. The pre-defined design rating tier may describe design rating patterns to generate the design scores 242B. To generate the design scores 242B, the score generation model 216 may select one of the design rating patterns from the pre-defined claim rating tier based on the domain to which the multimodal experience inputs 220 belong and use the selected design rating pattern to generate the design scores 242B for the deceptive designs 238. By way of non-limiting example, one of the design rating patterns selected for generating the design scores 242B may indicate: (i) Score 'A' - Impact of deceptive design is negligeable; (ii) Score 'B' - Impact of deceptive design is minor; (iii) Score 'C' - Impact of deceptive design is moderate; (vi) Score 'D' - Impact of deceptive design is serious; and (v) Score 'E' - Impact of deceptive design is very serious. As would be understood, the score generation model 216 may identify whether the impact of the deceptive designs 238 is negligeable, minor, moderate, serious, and very serious, based on the pattern types 238A and the descriptions 238B associated with the deceptive designs 238 (described along with FIGS. 4A-4B and 5A-5B).

Once the claim scores 242A and the design scores 242B are generated, the score generator 248 may compute the trust score 242 (overall score) for the multimodal experience inputs 220. The trust score 242 may be computed based on the claim scores 242A generated for the truth claims 234, the design scores 242B generated for the deceptive designs 238, and the alert 240 generated for the multimodal experience inputs 220. By way of non-limiting example, the trust score 242 may range from a letter 'A' to a letter 'E', where "A' being the optimal score and 'E" being the minimal score. In some examples, the trust score 242 may be computed as an average score using a numerical correspondence for each letter, for example, 'A'→1, 'B'→2, 'C'→3, 'D'→4, and 'E'→5. The trust score 242, the claim scores 242A, and the design scores 242B for the multimodal experience inputs 220 may be stored in the internal database 206.

The recommendation generator 250 may be operated when the user 108A includes the entity (e.g., the organization, the enterprise, the brand designer, the marketer, and/or the like). The recommendation generator 250 may generate recommendations 244 for the user 108A (e.g., the entity) based on the validation results of the multimodal experience inputs 220 and/or the alert 240 and/or the trust score 242 generated for the multimodal experience inputs 220. The recommendations 244 may be in compliance with rules and/or guidelines of the entity and aid in improving the trust score 242. The rules and/or guidelines may indicate the information or data or content that can be disclosed to the customer, what are the types of the information that can be disclosed to the customer, how extent the information can be disclosed to the customer, a period for disclosing the information to the customer, designs that can be disclosed to the customer, and/or the like. The recommendations 244 may include modifications or adjustments to be performed on the multimodal experience inputs 220, alternative designs, alternative truth claims, and/or the like, to avoid manipulative customer experiences. The modifications or adjustments may be in terms of designs, logics, wordings, a structure, and/or the like. The alternative designs may include honest designs without any disproof, false information, misinformation, falsehood, and/or the like. The alternative truth claims may include truth claims without any disproof, false information, misinformation, falsehood, and/or the like.

In an implementation, the recommendation generator 250 may use the recommendation model 218 for generating the recommendations 244. The recommendation model 218 may include a fine-tuned LLM. The recommendation model 218 may be dynamically fine-tuned by the fine-tuning engine 126 and stored in the model database 202. Initially, the recommendation model 218 may be fine-tuned based on fine-tuning recommendation datasets stored in the internal database 206. The fine-tuning recommendation datasets may include labeled designs and texts that are compliant with the rules and/or guidelines of the entity.

For generating the recommendations 244, the recommendation generator 250 may provide the truth claims 234 and the first set of logical fallacies 236A, the second set of logical fallacies 236B, and the confirmations 236C, and the deceptive designs 238 and the associated pattern types 238A and descriptions 238B as model inputs to the recommendation model 218. The recommendation model 218 may generate the recommendations 244 by processing the model inputs. The recommendations 244 may be complaint with the rules and/or guidelines of the entity. The recommendations 244 may be stored in the internal database 206.

The interface tool 118 may provide an output 252 on a user interface of the user device 104A associated with the user 108A for the multimodal experience inputs 220. In some examples, if the user 108A incudes the customer, the output 252 may include the truth claims 234, the first set of logical fallacies 236A, the second set of logical fallacies 236B, and the confirmations 236C associated with the truth claims 234, the deceptive designs 238, and the pattern types 238A, the descriptions 238B associated with the deceptive designs 238, the alert 240, and the trust score 242 including the claim scores 242A and the design scores 242B. In some other examples, if the user 108A incudes the entity, the output 252 may include the truth claims 234, the first set of logical fallacies 236A, the second set of logical fallacies 236B, and the confirmations 236C associated with the truth claims 234, the deceptive designs 238, and the pattern types 238A, the descriptions 238B associated with the deceptive designs 238, the alert 240, the trust score 242 including the claim scores 242A and the design scores 242B, and the recommendations 244. Therefore, the output 252 may aid the user 108A in performing faster and simpler review of the multimodal experience inputs 220, identifying the misinformation or false information in the multimodal experience inputs 220, and deciding on further tasks (vary based on the customer and the entity). For example, the customer may use the output 252 to decide to purchase or avail the respective product and/or service, or to select another product and/or service, and/or the like. The entity may use the output 252 to identify whether any modifications or adjustments required for the multimodal experience inputs 220 or to identify and remove any misinformation or false information present in the multimodal experience inputs 220, before sharing with the customers and for building trust and confidence with the customers by improving the trust score.

In some examples, in response to providing the output 252 for the multimodal experience inputs 220, the interface tool 118 may also receive user feedback 254 from the user 108A through the user device 104A. The user feedback 254 may identify any errors in the output 252 or indicate whether the output 252 is useful or not, ratings or review comments for the output 252, and/or the like. The interface tool 118 may provide the user feedback 254 to the fine-tuning engine 126 and/or may store the user feedback 254 in the internal database 206.

The fine-tuning engine 126 may dynamically fine-tune the models 208-218 of the model database 202 based on the user feedback 254. In some examples, the fine-tuning engine 126 may use Reinforcement Learning from Human Feedback (RLHF) techniques for fine-tuning the models 208-218 based on the user feedback. Dynamic fine-tuning of the models 208-218 may improve efficiency, performance, scalability, interpretability, and accuracy of the models 208-212, which may subsequently result in accurate validation of the multimodal experience inputs 220.

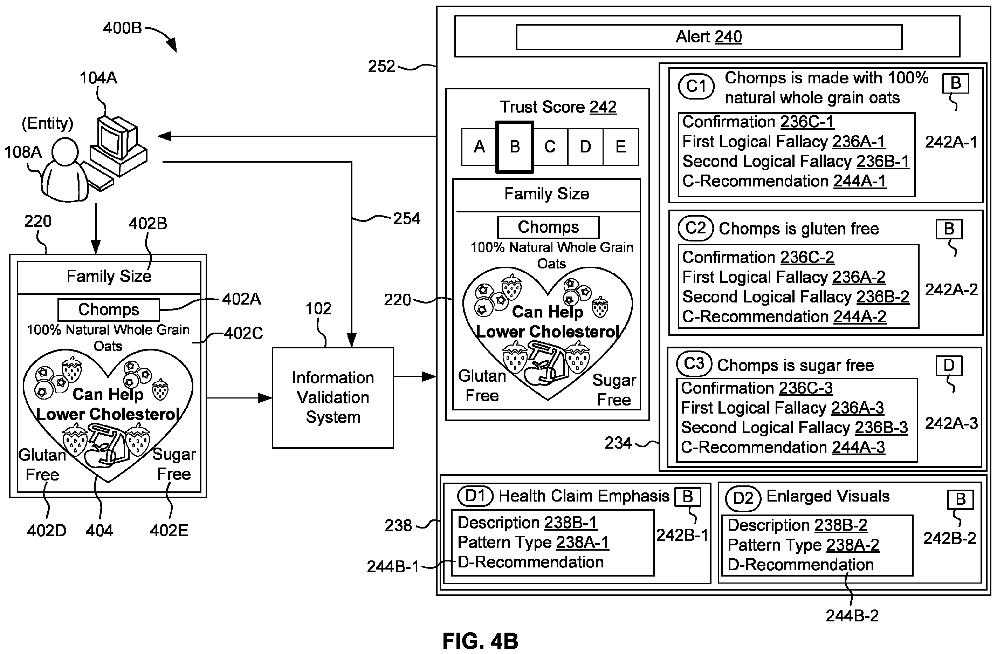

FIGS. 4A and 4B depict example illustrations 400A and 400B of validating the multimodal experience inputs 220, in accordance with implementation of the present disclosure.

The information validation system 102 receives the multimodal experience inputs 220 for validation from the user 108A associated with the user device 104A. In an example, as depicted in FIG. 4A, the user 108A includes a customer who wishes to validate authenticity of the multimodal experience inputs 220 before consumption. In another example, as depicted in FIG. 4B, the user 108A includes an entity who wishes to validate the authenticity of the multimodal experience inputs 220 before communicating to the customer.

As depicted in FIGS. 4A and 4B, the multimodal experience inputs 220 received from the customer and the entity are related to a food product named "Chomps" (e.g., multi-cereal product). The multimodal experience inputs 220 includes text elements 402A-402E (forming the text 220A depicted in FIG. 2) and an image 404 (analogous to the image 220C depicted in FIG. 2). A text element 402A indicates a name of the food product ("Chomps"), a text element 402B indicates a servable quantity size (e.g., a family size indicating that the food product may be served to members of a family), a text element 402C indicates what the food product is made up of (e.g., 100% natural whole grain oats), text elements 402D and 402E indicate features of the food product such as "Gluten Free" and "Sugar Free", respectively. The image 404 may include visual representations of ingredients (e.g., cereals) and text indicating health benefits (e.g., "Can Help Lower Cholesterol").

Upon receiving the multimodal experience inputs 220, the information validation system 102 generates the output 252 for the multimodal experience inputs 220 related to the food product. The output 252 may be generated based on validation of the multimodal experience inputs 220 and analysis of results of validation of the multimodal experience inputs 220 using the models 208-218 (depicted in FIG. 2), which are described in detail in conjunction with the validation engine 122 and the recommendation engine 124 of the information validation system 102 in FIGS. 1 and 2, therefore repeated description is omitted here for sake of brevity.

The output 252 includes the multimodal experience inputs 220, the truth claims 234, the deceptive designs 238, the alert 240, and the trust score 242. The truth claims 234 include truth claims C1, C2, and C3. If the user 108A includes the customer, as depicted in FIG. 4A, the truth claims C1, C2, and C3 may be respectively associated with confirmations 236C-1, 236C-2, and 236C-3 (collectively referenced as the confirmations 236C, as depicted in FIG. 2), first logical fallacies 236A-1, 236A-2, and 236A-3 (collectively referenced as the first set of logical fallacies 236A, as depicted in FIG. 2), second logical fallacies 236B-1, 236B-2, and 236B-3 (collectively referenced as the second set of logical fallacies 236B, as depicted in FIG. 2), and claim scores 242A-1, 242A-2, and 242A-3 (collectively referenced as the claim scores 242A). If the user includes the entity, as depicted in FIG. 4B, the truth claims C1, C2, and C3 may be respectively associated with the confirmations 236C-1, 236C-2, and 236C-3, the first logical fallacies 236A-1, 236A-2, and 236A-3, the second logical fallacies 236B-1, 236B-2, and 236B-3, the claim scores 242A-1, 242A-2, and 242A-3, and claim recommendations 244A-1, 244A-2, and 244A-3 (part of the recommendations 244 depicted in FIG. 2). It should be noted that term "claim recommendation" is depicted as "C-Recommendation" in FIG. 4B.

By way of non-limiting example, the truth claims C1, C2, C3 include:
Truth Claim C1: "Chomps is made with 100% natural whole grain oats"
   (For the user 108A including the customer or the entity as depicted in FIGS. 4A and 4B)
   Confirmation 236C-1: The packaging states "Made with 100% natural whole grain oats."
   Whole grains are commonly used in cereals and are known for their health benefits.
   First Logical Fallacy 236A-1 (Illogical statement): Appeal to nature: Assuming "natural" inherently means healthier or better.
   Second Logical Fallacy 236B-1 (Disproof): The term "natural" is not strictly regulated and may be used loosely in marketing.
   Claim Score 242A-1: 'B' (Quality of the truth claim C1 is High based on a level of impact that can be created by the illogical statement and the disproof on the customer)
   (For the user 108A including the entity as depicted in FIG. 4B)
   Claim Recommendation 244A-1: A text edit recommended for removing term "natural" and retaining the truth claim as "Chomps is made with 100% whole grain oats."
Truth Claim C2: "Chomps is gluten free"
   (For the user 108A including the customer or the entity as depicted in FIGS. 4A and 4B)
   Confirmation 236C-2: Gluten-free labeling is regulated by an authority 'A', which requires products labeled as such to contain less than 20 parts per million (ppm) of gluten. The packaging explicitly states "Gluten Free."
   First Logical Fallacy 236A-2 (Illogical statement): None identified.
   Second Logical Fallacy 236B-2 (Disproof): Cross-Contamination in manufacturing facilities can sometimes lead to gluten presence in products labeled as gluten free.
   Claim Score 242A-2: 'B' (Quality of the truth claim C2 is High based on a level of impact that can be created by the disproof on the customer)
   (For the user 108A including the entity as depicted in FIG. 4B)
   Claim Recommendation 244A-2: None
Truth Claim C3: "Chomps is sugar free"
   (For the user 108A including the customer or the entity as depicted in FIGS. 4A and 4B)
   Confirmation 236C-3: The packaging states "Sugar Free." The nutritional information shows 2 grams of total sugars, which may come from natural sources like fruit.
   First Logical Fallacy 236A-3 (Illogical statement): Misleading terminology: "Sugar Free" is misleading if the food product contains 2 grams of sugar.
   Second Logical Fallacy 236B-3 (Disproof): The term "Sugar Free" means less than 0.5 gram of sugars per serving, so the presence of 2 grams of sugars contradicts this truth claim. Claim Score 242A-3: 'D' (Quality of the truth claim C3 is Low based on a level of impact that can be created by the illogical statement and the disproof on the customer)
   (For the user 108A including the entity as depicted in FIG. 4B)
   Claim Recommendation 244A-3: Suggested edit: Chomps contains 2 grams of sugar, which may come from natural sources instead of explicitly stating that "Chomps is sugar free."

Further, the deceptive designs 238 includes deceptive designs D1 and D2. If the user 108A includes the customer, as depicted in FIG. 4A, the deceptive designs D1 and D2 may be respectively associated with pattern types 238A-1 and 238A-2 (collectively referenced as the pattern types 238A, as depicted in FIG. 2), descriptions 238B-1 and 238B-2 (collectively referenced as the descriptions 238B, as depicted in FIG. 2), and design scores 242B-1 and 242B-2 (collectively referenced as the design scores 242B). If the user includes the entity, as depicted in FIG. 4B, the deceptive designs D1 and D2 may be respectively associated with pattern types 238A-1 and 238A-2, the descriptions 238B-1 and 238B-2, the design scores 242B-1 and 242B-2, and design recommendations 244B-1 and 244B-2 (part of the recommendations 244 depicted in FIG. 2). It should be noted that term "design recommendation" is depicted as "D-Recommendation" in FIG. 4B.

By way of non-limiting example, the deceptive designs D1 and D2 may include:
Deceptive Design D1: Health Claim Emphasis
   (For the user 108A including the customer or the entity as depicted in FIGS. 4A and 4B)
   Description 238B-1: The health claim is prominently displayed on the front of the box, in large, bold text, making it one of the first things the customer can see.
   Pattern Type 238A-1: Overemphasis
   Design Score 242B-1: 'B' (Impact of the deceptive design D1 is minor)
   (For the user 108A including the entity as depicted in FIG. 4B)
   Design Recommendation 244B-1: Alternative design - Provide a more balanced view of the food product's health benefits and limitations and include a clear disclaimer that the food product should be a part of a balanced diet and that the other factors also contribute to heart health.
Deceptive Design D2: Enlarged Visuals
   (For the user 108A including the customer or the entity as depicted in FIGS. 4A and 4B)
   Description 238B-2: Visual representations of the cereals are enlarged in the image 404 that may mislead the customer about the size and appearance of the cereals inside the food product.
   Pattern Type 238A-2: Magnified representation
   Design Score 242B-2: 'B' (Impact of the deceptive design D2 is minor)
   (For the user 108A including the entity as depicted in FIG. 4B)
   Design Recommendation: Alternative design - Provide the image 404 with the cereal at actual size alongside the enlarged depiction to give a more accurate understanding.

Further, as depicted in FIGS. 4A and 4B, the trust score 242 may be generated as 'B' and the alert 240 may be generated as "the truth claims made on the food product are generally well-supported by evidence, particularly the use of whole grain oats and the potential cholesterollowering benefits of soluble fiber. However, the effectiveness of lowering cholesterol can vary among individuals. The deceptive designs try to be appealing and health-focused but employs some misleading visuals and claims."

After providing the output 252 to the user 108A (including the customer or the entity), the information validation system 102 may receive the user feedback 254 from the user 108A. The user feedback 254 is already described along with FIG. 2, therefore repeated description is omitted herein for sake of brevity. The user feedback 254 may be used by the information validation system 102 to retrain or fine-tune the models 208-218 (depicted in FIG. 2), which may aid in validating the multimodal experience inputs 220 with increased accuracy and relevance, while improving an overall performance of the information validation system 102.

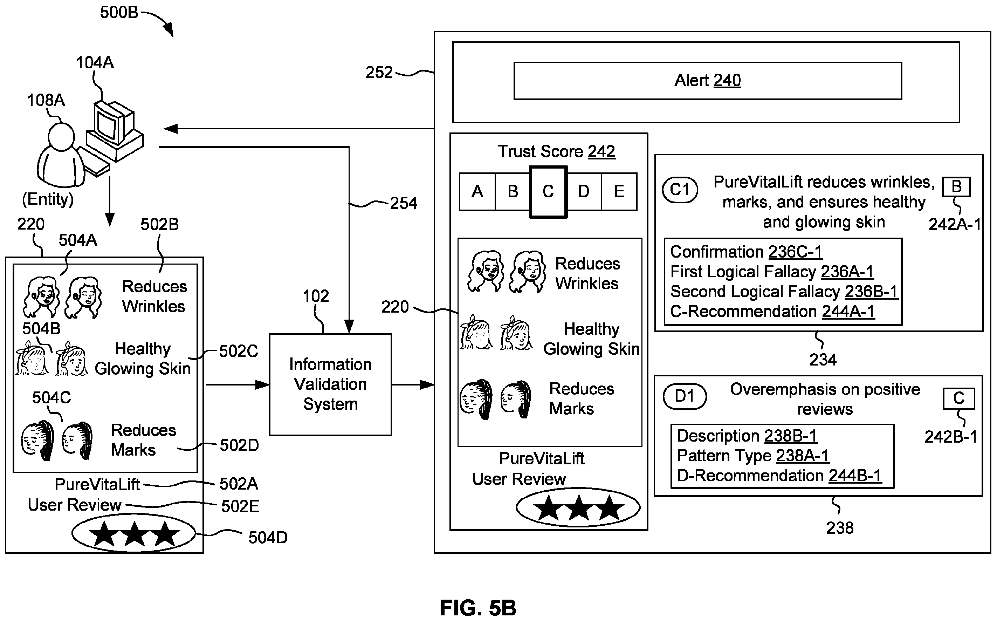

FIGS. 5A and 5B depict another example illustrations 500A and 500B of validating the multimodal experience inputs 220, in accordance with implementation of the present disclosure.

The information validation system 102 receives the multimodal experience inputs 220 from the user 108A associated with the user device 104A for validation. In an example, as depicted in FIG. 5A, the user 108A includes a customer who wishes to validate authenticity of the multimodal experience inputs 220 before consumption. In another example, as depicted in FIG. 5B, the user 108A includes an entity who wishes to validate the authenticity of the multimodal experience inputs 220 before communicating with the customer.

As depicted in FIGS. 5A and 5B, the multimodal experience inputs 220 received from the customer and the entity are related to a cosmetic product named "PureVitaLift". The multimodal experience inputs 220 includes text elements 502A-502E (forming the text 220A depicted in FIG. 2) and image elements 504A-504D (forming the image 220C depicted in FIG. 2). A text element 502A indicates a name of the cosmetic product ("PureVitalLift"). Text elements 502B, 502C, and 502D indicate benefits of the cosmetic product (e.g., reduces wrinkles, ensures healthy and glowing skin, and reduces marks). A text element 502E may indicate a user review section. The image elements 504A, 504B, and 504C indicate example photos of users (e.g., before and after using the cosmetic product) and the image element 504D may include icons depicting positive ratings received for the cosmetic product.

Upon receiving the multimodal experience inputs 220, the information validation system 102 generates the output 252 for the multimodal experience inputs 220 related to the cosmetic product. The output 252 may be generated based on validation of the multimodal experience inputs 220 and analysis of results of validation of the multimodal experience inputs 220 using the models 208-218 (depicted in FIG. 2), which are described in detail in conjunction with the validation engine 122 and the recommendation engine 124 in FIGS. 1 and 2, therefore repeated description is omitted here for sake of brevity.

The output 252 includes the multimodal experience inputs 220, the truth claims 234, the deceptive designs 238, the alert 240, and the trust score 242. For simplicity, the truth claims 234 including a truth claim C1 are depicted in FIGS. 5A and 5B. If the user 108A includes the customer, as depicted in FIG. 5A, the truth claim C1 may be associated with the confirmation 236C-1, the first logical fallacy 236A-1, the second logical fallacy 236B-1, and the claim score 242A-1. If the user 108A includes the entity, as depicted in FIG. 5B, the truth claim C1 may be associated with the confirmation 236C-1, the first logical fallacy 236A-1, the second logical fallacy 236B-1, the claim score 242A-1 and the claim recommendation 244A-1 (depicted as C-Recommendation in FIG. 5B). By way of non-limiting example, the truth claim C1 includes:
Truth Claim C1: PureVitaLift reduces wrinkles, marks, and ensures healthy and glowing skin.
(For the user 108A including the customer or the entity as depicted in FIGS. 5A and 5B)
Confirmation 236C-1: The cosmetic product contains key ingredients like Pro-Retinol, Vitamin C, and Hyaluronic acid, which are known to improve skin texture and appearance (Source ABC). User reviews and before and after photos show visible improvements in skin conditions.
Second Logical Fallacy 236B-1 (Disproof): Some dermatologists argue that over-thecounter products may not provide significant results compared to prescription treatments. Individual results may vary widely and some users may not experience noticeable improvements.
First Logical Fallacy 236A-1 (Logical Arguments): "Anecdotal Evidence": Relying on user reviews and before and after phots as primary evidence. Example user reviews and before and after photos show visible improvements.
Claim Score 242A-1: 'B' (Quality of the truth claim 1 is High)
(For the user 108A including the entity as depicted in FIG. 5B)
Claim Recommendation 244A-1: Suggestion to edit text as "Cosmetic product contains ingredients like Pro-Retinol, Vitamin C, and Hyaluronic acid, which are scientifically known to improve skin texture and appearance. However, individual results may vary."

Further, for simplicity, the deceptive designs 238 including a deceptive design D1 are depicted in FIGS. 5A and 5B. If the user 108A includes the customer, as depicted in FIG. 5A, the deceptive design D1 may be associated with the pattern type 238A-1, the description 238B-1, and the design score 242B-1. If the user includes the entity, as depicted in FIG. 5B, the deceptive design D1 may be associated with the pattern type 238A-1, the description 238B-1, the design score 242B-1, and the design recommendation 244B-1 (depicted as D-Recommendation in FIG. 5B). By way of non-limiting example, the deceptive design D1 may include:
Deceptive Design D1: Overemphasis on positive reviews
(For the user 108A including the customer or the entity as depicted in FIGS. 5A and 5B)
Description 238B-1: Highlights high star ratings and positive testimonials prominently, while negative reviews are less visible or harder to find. This can be seen in the user rating section where star ratings and customer feedback are shown.
Pattern Type 238A-1: Social Proof Manipulation
Design Score 242B-1: 'C' (Impact of the deceptive design D1 is Moderate)
(For the user 108A including the entity as depicted in FIG. 5B)
Design Recommendation 244B-1: Recommendation to provide a balanced view by showing a mixture of positive and negative reviews and to include a filter option for the customers to sort reviews by ratings. Improved transparency and the balanced view may enhance customer trust and experience.

Further, as depicted in FIGS. 5A and 5B, the trust score 242 may be generated as 'C' and the alert 240 may be generated as "the truth claim is well-supported by scientific evidence regarding the ingredients' efficacy but relies heavily on anecdotal user reviews. To update one's understanding, consider both scientific research and individual variability in product effectiveness. The deceptive design employs several manipulation tactics, including biased reviews, urgency, and hidden costs."

After providing the output 252 to the user 108A (including the customer or the entity), the information validation system 102 may receive the user feedback 254 from the user 108A. The user feedback 254 may be used by the information validation system 102 to retrain or fine-tune the models 208-218 (depicted in FIG. 2), which may aid in validating the multimodal experience inputs 220 with increased accuracy and relevance, while improving an overall performance of the information validation system 102.

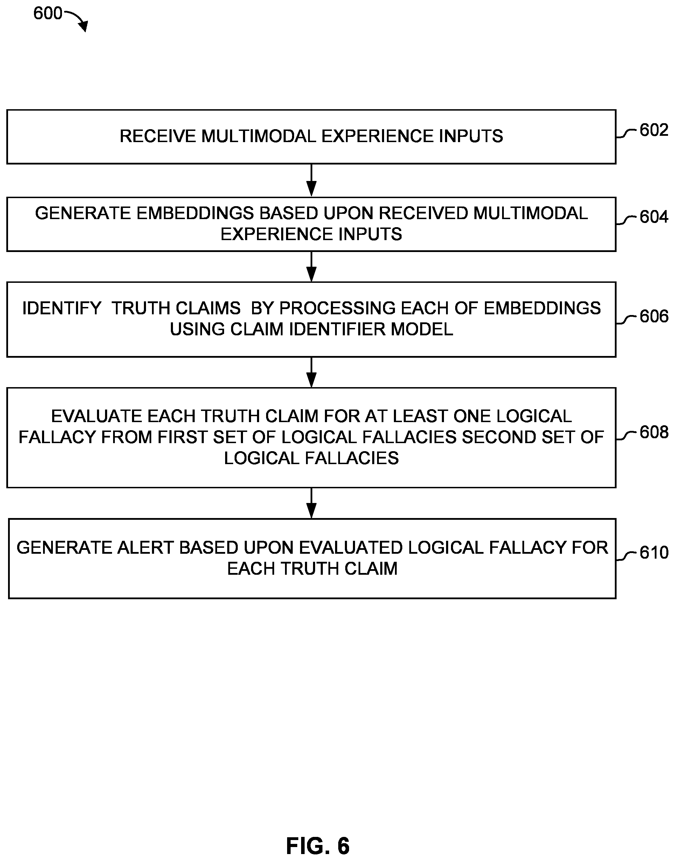

FIG. 6 is a flow diagram that presents an example computer implemented method 600 for validating the multimodal experience inputs 220 (depicted in FIG. 2), in accordance with implementations of the present disclosure. In some implementations, the method 600 may be executed by the processor 112 (including the one or more processors) of the computing device 110 in the information validation system 102 using the various modules 118-126 of the multimodal information manager 116, as described in relation to FIGS 1-3, 4A-4B, and 5A-5B.

The method 600 includes receiving 602 the multimodal experience inputs 220 from the user of the users 108A-108N through a user device of the user devices 104A-104N, respectively (depicted in FIG. 1). In some examples, the user may include a customer. In some other examples, the user may include an entity (e.g., an enterprise, an organization, a brand designer, a marketer, and/or the like). The multimodal experience inputs 220 may be related to the various domains and may include information associated with the different modalities such as the text 220A, the video 220B, the image 220C, the audio 220D, and/or the like.

The method 600 includes generating 604 the embeddings 222 based upon the received multimodal experience inputs 220. The embeddings 222 may include the vector embeddings and/or the text embeddings, depending on the modalities. In some examples, the embeddings 222 may be generated using the encoder 224 including the language encoder 224A, the vision encoder 224B, and the audio encoder 224C, which is already described in conjunction with FIG. 2, therefore repeated description is omitted herein for sake of brevity.

The method 600 includes identifying 606 the truth claims 234 by processing each of the embeddings 222 using the claim identifier model 208 (depicted in FIG. 2). The claim identifier model 208 may include a fine-tuned LLM. Fine-tuning of the claim identifier model 208 and identifying the truth claims 234 using the claim identifier model 208 are described in detail along with the fine-tuning engine 126 and the truth claim identifier 226 in FIG. 2, therefore repeated description is omitted herein for sake of brevity.

After identifying the truth claims 234, the method 600 includes evaluating 608 each truth claim of the truth claims 234 for at least one logical fallacy from the first set of logical fallacies 236A and the second set of logical fallacies 236B. In some examples, each truth claim may be evaluated for the at least one logical fallacy using the logical model 212 and the search model 214 (depicted in FIG. 2), which is described in detail along with the logic analyzer 228 and the fact analyzer 230 in FIG. 2, therefore repeated description is omitted herein for sake of brevity.

Based upon the evaluated at least one logical fallacy for each truth claim, the method 600 includes generating 610 the alert 240. The alert 240 may provide insights or an overall summary describing claim logic and veracity to warn the user about a manipulation attempt.

Additionally, or alternatively, the method 600 includes identifying the deceptive designs 238 by processing each of the embeddings using the design model 210 (depicted in FIG. 2). The design model 210 may include a VLM that is fine-tuned based on the deceptive designs identified from results of previous validations of the multimodal experience inputs 220. Each of the deceptive designs used for fine-tuning of the design model 210 may include a description and one or more visual examples associated with the deceptive design. In addition, the deceptive design may also include a description of an alternative design (e.g., honest design). Along with the evaluated at least one logical fallacy for each truth claim, the method 600 includes using the identified deceptive designs for generating the alert 240.

In some implementations, the method 600 includes generating the trust score 242 (depicted in FIG. 2) corresponding to the alert 240 and presenting the trust score 242 along with the alert 240 to the user, which is described in detail along with the alert generator 246 and the score generator 248 in FIG. 2.

In some implementations, the method 600 includes generating and presenting the recommendations 244 to improve the trust score 242. The recommendations 244 may be intended for the user including the entity. The recommendations 244 may include a design modification, and/or an alternative description of a product and/or a service. Generating the recommendation is described in detail along with the recommendation generator 250 in FIG. 2.

Implementations of the present disclosure provide technical solutions to multiple technical problems that arise in the context of validating multimodal experience inputs or multimodal information. Implementations of the present disclosure enable accurate and efficient validation framework for validating the multimodal experience inputs related to a product and/or a service. The validation framework may be deployed at both customer and entity ends and may aid in establishing and maintaining authenticity of the multimodal experience inputs by warning the customer about potential deceptive designs and rhetorical manipulation attempts and by recommending the entity to review and improve the multimodal experience inputs to foster customer trust.

In the present disclosure, each of the multimodal experience inputs may be subjected to individual validation and generate an alert or a trust score by cross-connecting or correlating results of all the individual validations. For example, the multimodal experience inputs including information associated with text and/or audio (audio may be converted into text for validation) may be validated by identifying truth claims and further evaluating the truth claims for at least one logical fallacy and at least one confirmation. The multimodal experience inputs including information associated with a video and/or an image may be validated by identifying deceptive designs and associated pattern types and descriptions. The truth claims and the associated at least one logical fallacy and confirmation, and the deceptive designs and the associated pattern types and descriptions are correlated and analyzed for generating the alert and the trust score. Therefore, the alert and the trust score may be generated by detecting cross-modal transference and identifying contextual clues associated with the different modalities, which may further improve accuracy of the validation of the multimodal experience inputs without skipping any of the modalities.

Implementations of the present disclosure may further generate recommendations for the entity to alter or modify or regenerate the multimodal experience inputs based on the alert and the trust score. Therefore, the entity may adapt to efficient quality checks for continuing engagement with customers and for developing their brand equity without including any misinformation or false information.

Implementations of the present disclosure may employ modelling or agentic architecture, which supports leveraging of dedicated models (a claim identifier model, a logical model, a search model, a design model, a score generation model, a recommendation model) for identifying the truth claims, evaluating the truth claims for the at least one logical fallacy, identifying the deceptive designs, generating the trust score, and generating the recommendations. The models may include fine-tuned models, which are dynamically configured for performing intended functions. Therefore, a tendency of each of the models to deviate from a specified or dedicated function or hallucinations of each of the models (which may be described as errors, inaccuracies, and/or untruths in an output) may be reduced. Due to which, validation of the multimodal experience inputs may be performed by following a simple step by step operation list that may improve the accuracy of the validation. In addition, with the dedicated models, the multimodal experience inputs may be validated without requiring any additional computing resources (e.g., processing resources, memory resources, communication resources, and/or the like) and without any delay.

Implementations of the present disclosure may further enable dynamic fine-tuning or retraining of the dedicated models based on user feedback received in response to an output provided for the multimodal experience inputs. Dynamic fine-tuning of the dedicated models may improve performance, efficiency, scalability, accuracy, and reliability of the dedicated models, which may further improve efficiency and performance of the overall validation framework.

Therefore, with the above-described technical advantages, the multimodal experience inputs may be accurately validated with reduced time and reduced utilization of the computing resources, while improving user satisfaction.

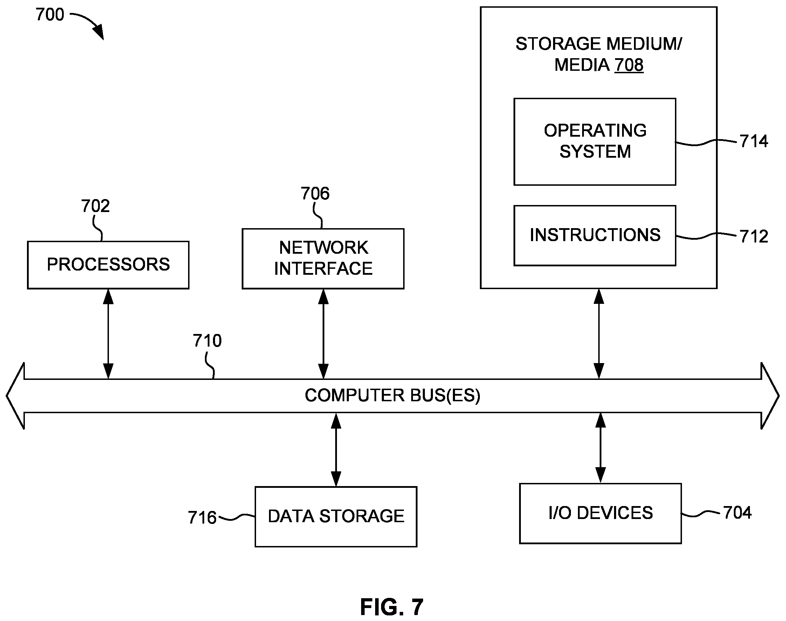

FIG. 7 depicts a computer system 700 that may be used to implement the information validation system 102 disclosed in the example environment of FIG. 1. More particularly, computing machines such as desktops, laptops, smartphones, tablets, and wearables which may be used for validating the multimodal experience inputs. The computer system 700 may include additional components not shown and that some of the process components described may be removed and/or modified. In another example, a computer system 700 may be deployed on external-cloud platforms such as cloud, internal corporate cloud computing clusters, organizational computing resources, and/or the like.

The computer system 700 includes processor(s) 702 such as, a central processing unit, ASIC or another type of processing circuit, input/output devices (I/O devices) 704 such as, a display, mouse keyboard, etc., a network interface 706 such as, a Local Area Network (LAN), a wireless 802.11x LAN, a 3G or 4G mobile WAN or a WiMax WAN, and a storage media or medium 708 (also be referenced as computer-readable medium 708 (CRM)). Each of these components may be operatively coupled to a bus 710. The computer-readable medium 708 may be any suitable medium that participates in providing instructions to the processor(s) 702 for execution. For example, the computer-readable medium 708 may be non-transitory or non-volatile medium such as, a magnetic disk or solid-state non-volatile memory or volatile medium such as RAM. The instructions or modules stored on the computer-readable medium 708 may include machine-readable instructions 712 executed by the processor(s) 702 that cause the processor(s) 702 to perform the methods and functions of the information validation system 102.

The information validation system 102 may be implemented as software stored on a non-transitory processor-readable medium and executed by the processor(s) 702. For example, the computer-readable medium 708 may store an operating system 714 such as MAC OS, MS WINDOWS, UNIX, or LINUX, and code, for the information validation system 102. The operating system 714 may be multi-user, multiprocessing, multitasking, multithreading, real-time, and the like. For example, during runtime, the operating system 714 is running and the code for the information validation system 102 is executed by the processor(s) 702.

The computer system 700 may include a data storage 716, which may include non-volatile data storage. The data storage 716 stores any data used or generated by the information validation system 102.

The network interface 706 connects the computer system 700 to internal systems for example, via a LAN. Also, the network interface 706 may connect the computer system 700 to the Internet. For example, the computer system 700 may connect to web browsers and other external applications and systems via the network interface 706.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer-readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer may include a processor for performing instructions and one or more memory devices for storing instructions and data. Generally, a computer also includes or is operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor(s) 702 and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN"), e.g., the Internet.

The computing system may include clients and servers. A client and server are generally remote from each other and interact through a communication network. The relationship between client and server arises by virtue of computer programs running on the respective computers and having a client-server relationship with each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination with a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together into a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A computer-implemented method comprising:
receiving multimodal experience inputs from a user;
generating a plurality of embeddings based upon the received multimodal experience inputs;
identifying, by processing each of the plurality of embeddings using a claim identifier model, at least one truth claim;
evaluating the at least one truth claim for at least one logical fallacy from a first set of logical fallacies and a second set of logical fallacies; and
generating, based upon the evaluated at least one logical fallacy for the at least one truth claim, an alert providing insights describing claim logic and veracity to warn the user about a manipulation attempt.

2. The computer-implemented method of claim 1, wherein the plurality of embeddings comprises one or more vector embeddings and/or one or more text embeddings, and/or
wherein the claim identifier model comprises a fine-tuned Large Language Model (LLM).

3. The computer-implemented method of claim 1, further comprising generating a trust score corresponding to the generated alert and presenting the trust score along with the alert to the user,
in particular further comprising generating and presenting recommendations to improve the trust score, wherein the recommendations comprise a design modification, and/or an alternative description of a product.

4. The computer-implemented method of claim 1, further comprising identifying, by processing each of the plurality of embeddings using a design model, at least one deceptive design, wherein the at least one deceptive design is used for generating the alert.

5. The computer-implemented method of claim 4, wherein the design model comprises a Vision Language Model (VLM) that is fine-tuned using a plurality of deceptive designs.

6. The computer-implemented method of claim 5, wherein a deceptive design of the plurality of deceptive designs comprises a description and one or more visual examples associated with the deceptive design,
in particular wherein the deceptive design further comprises a description of an alternative design.

7. A computing device comprising:
at least one memory configured to store machine-executable instructions; and
at least one processor communicatively coupled with the at least one memory, and configured to execute the machine-executable instructions to cause the computing device to perform operations comprising:
receiving multimodal experience inputs from a user;
generating a plurality of embeddings based upon the received multimodal experience inputs;
identifying, by processing each of the plurality of embeddings using a claim identifier model, at least one truth claim;
evaluating the at least one truth claim for at least one logical fallacy from a first set of logical fallacies and a second set of logical fallacies; and
generating, based upon the evaluated at least one logical fallacy for the at least one truth claim, an alert providing insights describing claim logic and veracity to warn the user about a manipulation attempt.

8. The computing device of claim 7, wherein the plurality of embeddings comprises one or more vector embeddings and/or one or more text embeddings, and/or
wherein the claim identifier model comprises a fine-tuned Large Language Model (LLM).

9. The computing device of claim 7, wherein the operations further comprise generating a trust score corresponding to the generated alert and presenting the trust score along with the alert to the user.

10. The computing device of claim 9, wherein the operations further comprise generating and presenting recommendations to improve the trust score, wherein the recommendations comprise a design modification, and/or an alternative description of a product.

11. The computing device of claim 7, wherein the operations further comprise identifying, by processing each of the plurality of embeddings using a design model, at least one deceptive design, wherein the at least one deceptive design is used for generating the alert.

12. The computing device of claim 11, wherein the design model comprises a Vision Language Model (VLM) that is fine-tuned using a plurality of deceptive designs.

13. The computing device of claim 12, wherein a deceptive design of the plurality of deceptive designs comprises a description and one or more visual examples associated with the deceptive design
in particular, wherein the deceptive design further comprises a description of an alternative design.

14. At least one computer-readable medium comprising machine-executable instructions, which, when executed by at least one processor of a computing device, cause the computing device to perform operations comprising:
receiving multimodal experience inputs from a user;
generating a plurality of embeddings based upon the received multimodal experience inputs;
identifying, by processing each of the plurality of embeddings using a claim identifier model, at least one truth claim;
evaluating the at least one truth claim for at least one logical fallacy from a first set of logical fallacies and a second set of logical fallacies; and
generating, based upon the evaluated at least one logical fallacy for the at least one truth claim, an alert providing insights describing claim logic and veracity to warn the user about a manipulation attempt.

15. The at least one computer-readable medium of claim 14, wherein the operations further comprise:
generating a trust score corresponding to the generated alert and presenting the trust score along with the alert to the user; and
generating and presenting recommendations to improve the trust score, wherein the recommendations comprise a design modification, and/or an alternative description of a product.
